# EUROPEAN PATENT APPLICATION

(11) **EP 3 193 116 A1**
(43) Date of publication of application: **19.07.2017**
(21) Application number: 16207351.4
(22) Date of filing: 29.12.2016
(51) Int. Cl.: F28D 7/00, F28F 1/02, F28F 1/04, F28F 7/02, F28F 13/08

(54) **HEAT EXCHANGERS**

(30) Priority: 13.01.2016 US 201614994775
(71) Applicant: Hamilton Sundstrand Corporation, Charlotte, NC 28217 (US)
(72) Inventor: KUCZEK, Andrzej E., Bristol, CT Connecticut 06010 (US); WONG, Eva, Glastonbury, CT Connecticut 06033 (US); ST. ROCK, Brian, Andover, CT Connecticut 06232 (US); TURNEY, Joseph, Amston, CT Connecticut 06321 (US)
(74) Representative: Iceton, Greg James

(57) **Abstract**

A heat exchanger (100) includes a body (101), a plurality of first flow channels (103) defined in the body (101), and a plurality of second flow channels (105) defined in the body (101), the second flow channels (105) fluidly isolated from the first flow channels (103), wherein at least one of the first flow channels (103) or the second flow channels (105) have a changing characteristic along a direction of flow within the first flow channels (103) or the second flow channels (105).

## Description

### BACKGROUND

### 1. Field

The present disclosure relates to heat exchangers, more specifically to more thermally efficient heat exchangers.

### 2. Description of Related Art

Conventional multi-layer sandwich cores are constructed out of flat sheet metal dividing plates, spacing bars, and two dimensional thin corrugated fins brazed together. The fabrication process is well established and relatively simple. However, the manufacturing simplicity has a negative impact on the performance. The channel geometry is two dimensional and does not allow for aspect ratio change that has an impact on flow distribution and pressure drop. In addition, the integrity to the structure is limited by the strength and quality of the braze joints which may be subject to stress concentration since there is no mechanism to control the size of the corner fillets. Flat geometry of the dividing plates exposed to high pressure causes bending, so thicker plates are used to reduce the stress level at expense of the weight.

Such conventional methods and systems have generally been considered satisfactory for their intended purpose. However, there is still a need in the art for improved heat exchangers. The present disclosure provides a solution for this need.

### SUMMARY

A heat exchanger includes a body, a plurality of first flow channels defined in the body, and a plurality of second flow channels defined in the body, the second flow channels fluidly isolated from the first flow channels, wherein at least one of the first flow channels or the second flow channels have a changing characteristic along a direction of flow within the first flow channels or the second flow channels.

The changing characteristic of the hot and/or second flow channels can include a changing flow area. The changing flow area can increase a first flow area toward a first flow outlet of the heat exchanger. The changing flow area can decrease a second flow area toward the first flow outlet as the first flow area increases.

The changing characteristic of the hot and/or second flow channels can include a changing flow area shape. In certain embodiments, the changing flow area shape can include a first polygonal flow area at a first flow inlet which transitions to a second polygonal flow area having more sides at a first flow outlet. The changing flow area shape can include a first polygonal flow area at a second flow inlet which transitions to a second polygonal flow area having more sides at a second flow outlet.

The changing characteristic can include flow direction such that the body includes a turning shape. In certain embodiments, the turning shape can include one or more curves. The one or more curves can cause the turning shape to be non-planer.

A method for manufacturing a heat exchanger includes forming a body to include a plurality of first flow channels and a plurality of second flow channels such that the second flow channels are fluidly isolated from the first flow channels, and such that at least one of the first flow channels or the second flow channels have a changing characteristic along a direction of flow within the first flow channels or the second flow channels. Forming the heat exchanger can include additively manufacturing the heat exchanger. Additively manufacturing the heat exchanger can include monolithically forming the body to have a turning shape. Monolithically forming the body to have a turning shape can include monolithically forming the body to be non-planar.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described by way of example only in detail herein below with reference to certain figures, wherein:
Fig. 1A is a perspective view of an embodiment of a heat exchanger in accordance with this disclosure, showing a hot flow inlet/cold flow outlet of the heat exchanger;
Fig. 1B is a perspective cross-sectional view of the heat exchanger of Fig. 1A, showing a middle portion of the heat exchanger;
Fig. 1C is a perspective cross-sectional view of the heat exchanger of Fig. 1A, showing a hot flow outlet/cold flow inlet of the heat exchanger;
Fig. 2 is a cross-sectional view of an embodiment of a heat exchanger in accordance with this disclosure;
Fig. 3 is a perspective cross-sectional view of an embodiment of a heat exchanger in accordance with this disclosure.

### DETAILED DESCRIPTION

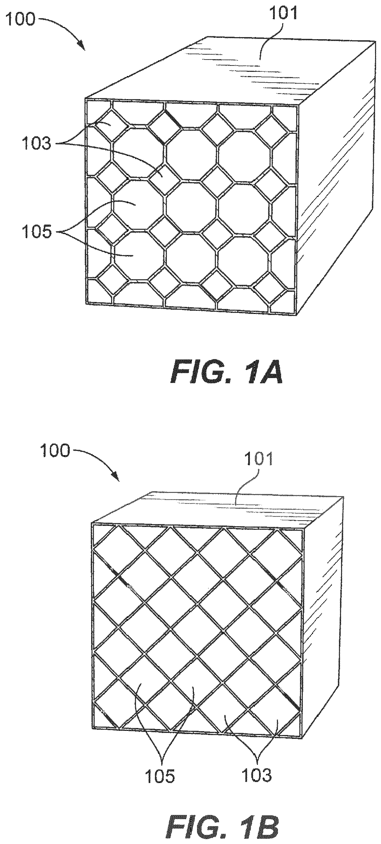

Reference will now be made to the drawings wherein like reference numerals identify similar structural features or aspects of the subject disclosure. For purposes of explanation and illustration, and not limitation, an illustrative view of an embodiment of a heat exchanger in accordance with the disclosure is shown in Fig. 1A and is designated generally by reference character 100. Other embodiments and/or aspects of this disclosure are shown in Figs. 1B-3. The systems and methods described herein can be used to reduce weight and/or increase performance of heat transfer systems.

Referring to Fig. 1A, a heat exchanger 100 includes a body 101, a plurality of first flow channels, e.g., hot flow channels 103 as described herein, defined in the body 101, and a plurality of second flow channels, e.g., cold flow channels 105 as described herein, defined in the body 101. While hot flow channels 103 and the cold flow channels 105 are described with respect to a relative temperature of flow therein, it is contemplated that the hot flow channels 103 can be used for cold flow and vice versa, or any other suitable arrangement.

The cold flow channels 105 are fluidly isolated from the hot flow channels 103. At least one of the hot flow channels 103 or the cold flow channels 105 have a changing characteristic along a direction of flow within the hot flow channels or the cold flow channels 101. The body 101 can be made of metal and/or any other suitable material.

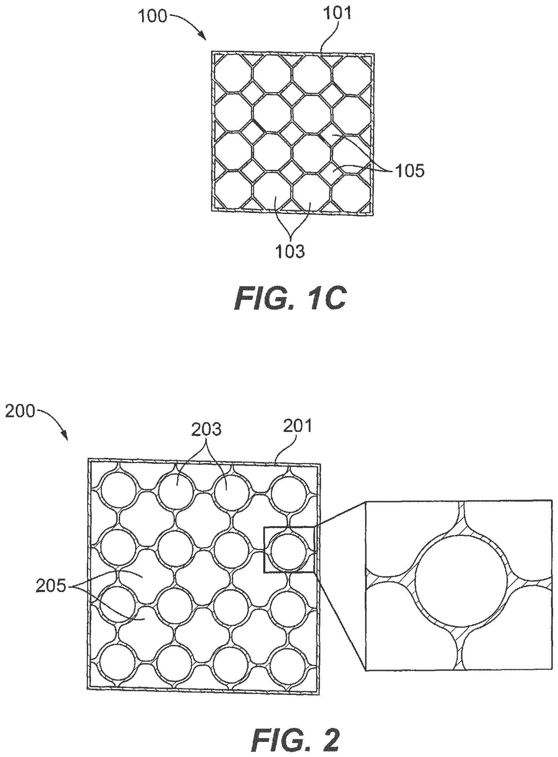

As shown in Figs. 1A, 1B, and 1C, the changing characteristic of the hot and/or cold flow channels 103, 105 can include a changing flow area. For example, the changing flow area can increase a hot flow area toward a hot flow outlet of the heat exchanger 100 (e.g., as shown in transitioning from Fig. 1A, through Fig. 1B, to Fig. 1C). Similarly, the changing flow area can decrease a cold flow area toward the hot flow outlet as the hot flow area increases (which may be a function of the increasing hot flow area in order to maintain total area of the body 101). It is contemplated that one or more of the hot flow channels 103 or the cold flow channels 105 may maintain a constant flow area or change in any other suitable manner.

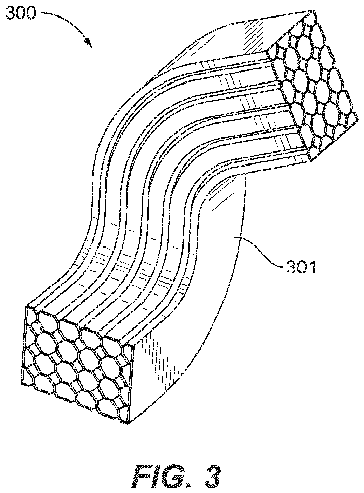

In certain embodiments, the changing characteristic of the hot and/or cold flow channels 103/105 can include a changing flow area shape. In certain embodiments, the changing flow area shape can include a first polygonal flow area at a hot flow inlet (e.g., a diamond as shown in Figs. 1A and 1B) which transitions to a second polygonal flow area having more sides at a hot flow outlet (e.g., a hexagon as shown in Fig. 3). Also as shown, the changing flow area shape can include a first polygonal flow area at a cold flow inlet (e.g., a diamond as shown in Figs. 1C and 1B) which transitions to a second polygonal flow area having more sides at a cold flow outlet (e.g., a hexagon as shown in Fig. 1A).

Any other suitable flow area shapes for the hot flow channels 103 and/or the cold flow channels 105 are contemplated herein. For example, referring to Fig. 2, a heat exchanger 200 can include a body 201 defining elliptical hot flow channels 203 and non-elliptical cold flow channels 205. Channels 203, 205 can include one or more changing characteristics as described hereinabove and/or described below.

Referring to Fig. 3, the changing characteristic can include flow direction such that the body 301 of heat exchanger 300 includes a turning shape. In certain embodiments, the turning shape can include one or more curves. For example, as shown, the one or more curves can cause the turning shape to be non-planer (e.g., such that the turning shape turns in three dimensions). In such embodiments, the body 301 can be designed for specific special constraints of an intended system of use (e.g., to minimize volume of the entire system). Any other suitable shape for the body 101 is contemplated herein.

It is contemplated that a heat exchanger 100, 200, 300 can include any suitable header (not shown) configured to connect the hot flow channels 103 to a hot flow source (not shown) while isolating the hot flow channels 103 from the cold flow channels 105. The header may be formed monolithically with the core of the heat exchanger 100, 200, 300, or otherwise suitable attached to cause the hot flow channels 103 to converge together and/or to cause the cold flow channels 105 to converge together.

In accordance with at least one aspect of this disclosure, a method for manufacturing a heat exchanger 100 includes forming a body 101 to include a plurality of hot flow channels 103 and a plurality of cold flow channels such that the cold flow channels 105 are fluidly isolated from the hot flow channels 103, and such that at least one of the hot flow channels 103 or the cold flow channels 105 have a changing characteristic along a direction of flow within the hot flow channels or the cold flow channels 101. In certain embodiments, the forming of the heat exchanger 100 can include additively manufacturing the heat exchanger 100 using any suitable method (e.g., powder bed fusion, electron beam melting).

Additively manufacturing the heat exchanger 100 can include monolithically forming the body 101 to have a turning shape. Monolithically forming the body 101 to have a turning shape can include monolithically forming the body 101 to be non-planar (e.g., as shown in Fig. 3).

Embodiments as described above allow for enhanced control of flow therethrough, a reduction of pressure drop, control of thermal stresses, easier integration with a system, and reduced volume and weight. Unlike conventional multi-layer sandwich cores, embodiments as described above allow for channel size adjustment for better flow impedance match across the core. Also, embodiments allow the geometry of the core to be twisted or bent to better fit available space as desired from a system integration perspective.

Further, in additively manufactured embodiments, since the core is made out of a monolithic material, the material can be distributed to optimize heat exchange and minimize structural stresses, thus minimizing the weight. Bending stresses generated by high pressure difference between cold and hot side are greatly reduced by adjusting curvature of the walls and appropriately sized comer fillets. Such solution reduces weight, stress, and material usage since the material distribution can be optimized and since the material works in tension instead of bending.

The methods and systems of the present disclosure, as described above and shown in the drawings, provide for heat exchangers with superior properties including reduced weight and/or increased efficiency. While the apparatus and methods of the subject disclosure have been shown and described with reference to embodiments, those skilled in the art will readily appreciate that changes and/or modifications may be made thereto without departing from the scope of the subject disclosure.

## Claims

1. A heat exchanger (100), comprising:
a body (101);
a plurality of first flow channels (103) defined in the body (101); and
a plurality of second flow channels (105) defined in the body (101), the second flow channels (105) fluidly isolated from the first flow channels (103), wherein at least one of the first flow channels (103) or the second flow channels (105) have a changing characteristic along a direction of flow within the first flow channels (103) or the second flow channels (105).

2. The heat exchanger of claim 1, wherein the changing characteristic of the hot and/or second flow channels includes a changing flow area.

3. The heat exchanger of claim 2, wherein the changing flow area increases a first flow area toward a first flow outlet of the heat exchanger.

4. The heat exchanger of claim 3, wherein the changing flow area decreases a second flow area toward the first flow outlet as the first flow area increases.

5. The heat exchanger of claim 4, wherein the changing characteristic of the hot and/or second flow channels includes a changing flow area shape.

6. The heat exchanger of claim 5, wherein the changing flow area shape includes a first polygonal flow area at a first flow inlet which transitions to a second polygonal flow area having more sides at a first flow outlet.

7. The heat exchanger of claim 5, wherein the changing flow area shape includes a first polygonal flow area at a second flow inlet which transitions to a second polygonal flow area having more sides at a second flow outlet.

8. The heat exchanger of claim 1, wherein the changing characteristic includes flow direction such that the body includes a turning shape.

9. The heat exchanger of claim 1, wherein the turning shape includes one or more curves.

10. The heat exchanger of claim 1, wherein the one or more curves cause the turning shape to be non-planer.

11. A method for manufacturing a heat exchanger, comprising;
forming a body to include a plurality of first flow channels and a plurality of second flow channels such that the second flow channels are fluidly isolated from the first flow channels, and such that at least one of the first flow channels or the second flow channels have a changing characteristic along a direction of flow within the first flow channels or the second flow channels.

12. The method of claim 11, wherein forming the heat exchanger includes additively manufacturing the heat exchanger.

13. The method of claim 12, wherein additively manufacturing the heat exchanger includes monolithically forming the body to have a turning shape.

14. The method of claim 13, wherein monolithically forming the body to have a turning shape includes monolithically forming the body to be non-planar.
